## Europäisches Patentamt

## European Patent Office

## Office européen des brevets

(11) Veröffentlichungsnummer: **0 255 059**
**B1**

(12) **EUROPÄISCHE PATENTSCHRIFT**

(45) Veröffentlichungstag der Patentschrift:
04.04.90

(51) Int. Cl.⁴: **F02B 27/02**

(21) Anmeldenummer: 87110730.6

(22) Anmeldetag: 24.07.87

(54) Resonanzansaugsystem für Brennkraftmaschinen.

(30) Priorität: 30.07.86 DE 3625756

(43) Veröffentlichungstag der Anmeldung:
03.02.88 Patentblatt 88/5

(45) Bekanntmachung des Hinweises auf die Patenterteilung:
04.04.90 Patentblatt 90/14

(84) Benannte Vertragsstaaten:
DE ES FR GB IT SE

(56) Entgegenhaltungen:
EP-A- 0 065 076
EP-A- 0 111 336
DE-A- 1 941 875
FR-A- 2 514 822

RESEARCH DISCLOSURE, Nr. 267, Juli 1986,
Seiten 428-430, Nr. 26761, Emsworth, Hampshire, GB;
"Engine intake tuning"
PATENT ABSTRACTS OF JAPAN, Band 10,
Nr. 360 (M-541)[2417], 3. Dezember 1986; &
JP-A-61 155 618 (NISSAN MOTOR CO. LTD) 15-07-1986

(73) Patentinhaber: Bayerische Motoren Werke
Aktiengesellschaft, Patentabteilung
AJ-30 Postfach 40 02 40 Petuelring 130,
D-8000 München 40(DE)

(72) Erfinder: Nehse, Wolfgang, Fliederweg 5,
D-8059 Eitting(DE)

(74) Vertreter: Bücken, Helmut, Bayerische Motoren Werke
Aktiengesellschaft Postfach 40 02 40 Petuelring 130 -
AJ-30, D-8000 München 40(DE)

# Beschreibung

Die Erfindung bezieht sich auf ein Resonanzansaugsystem der im Oberberiff des ersten Anspruchs angegebenen Art.

Es ist bekannt, mit Hilfe von Schwingungsresonanzen innerhalb des Ansaugsystems einer Brennkraftmaschine eine gemäßigte Aufladung zu erzielen. Ist dabei die Möglichkeit gegeben, die Resonanzfrequenz zu ändern, so kann dieser Aufladeeffekt im gesamten Maschinenbetriebsbereich erreicht werden. Die DE-OS 3 119 314 beschreibt beispielsweise ein derartiges System, wobei mittels verschiebbarer Kolben das Volumen der Resonanzräume veränderbar ist. Eine Beeinflussung der Resonanzfrequenz im gesamten Betriebsbereich ist dabei aber nur möglich, wenn mehrere Resonanzkammern vorgesehen sind, und diese beispielsweise rohrförmigen Kammern an beiden Enden mit verstellbaren Kolben versehen werden. Dieses System ist somit aufwendig und wegen der Vielzahl der Einzelteile unzuverlässig.

Daneben ist ein weiteres Ansaugsystem mit kontinuierlich einstellbarer Resonanzfrequenz aus der DE-OS 1 576 022 bekannt. Hierbei sind die von der Resonanzkammer zu den einzelnen Zylindern einer Mehrzylinder-Brennkraftmaschine führenden Ansaugrohre in ihrer Länge veränderbar gestaltet. Eine derartige Anordnung ist nicht nur wegen der erforderlichen Dichtheit des Ansaugsystems mit großem Bauaufwand verbunden, vielmehr ist auch eine aufwendige Verstelleinrichtung erforderlich, um die Länge aller Saugrohre parallel zu verändern.

Wesentlich einfacher ist es, an einem Resonanzansaugsystem die Geometrie der zur Resonanzkammer führenden Zuleitung zu verändern. Ein derartiges System mit kontinuierlich veränderbarer Zuleitungslänge ist in Fig. 5 des Research Disclosure Nr. 267 "Engine intake tuning" gezeigt. Der Bauaufwand sowie die Zahl der beweglichen Einzelteile wird hierbei zwar gering gehalten, jedoch ist die hiermit erzielbare Variation der Resonanzfrequenz unter realistischen Einbauverhältnissen der Brennkraftmaschine, beispielsweise in einem Kraftfahrzeug, unbefriedigend gering.

Aufgabe der Erfindung ist es daher, Maßnahmen aufzuzeigen, mit Hilfe derer die Resonanzfrequenz eines derartigen Resonanzsystemes auf einfache Weise in einem breiten Spektrum veränderbar ist.

Zur Lösung der Aufgabe sind die kennzeichnenden Merkmale des Anspruchs 1 vorgesehen.

In der Erkenntnis, daß sich die Resonanzfrequenz einer Gasleitung näherungsweise proportional mit dem wirksamen Querschnitt und umgekehrt proportional mit der Quadratwurzel der wirksamen Länge verändert, ist eine größtmögliche Frequenzänderung erzielbar, wenn beispielsweise die Vergrößerung der Rohrlänge gleichzeitig mit einer Verringerung des Rohrquerschnittes einhergeht. Im Sinne einer konstruktiv einfachen Ausgestaltung ist dabei das Stellelement zur Veränderung der Resonanzfrequenz im Inneren der Zuleitung vorgesehen. Hierdurch wird auch die Gefahr von Undichtigkeiten im Ansaugsystem deutlich herabgesetzt. aufgrund der kontinuierlichen Querschnittsänderung ist es dabei möglich, sowohl den wirksamen Rohrquerschnitt als auch die wirksame Rohrlänge stufenlos zu verändern und somit die gesamte erzielbare Breite des Resonanzspektrums ausnutzen zu können.

In Anspruch 2 ist eine vorteilhafte Weiterbildung der Erfindung beschrieben. Eine keilförmige Gestaltung von Zuleitung und Stellelement gewährleistet zum einen eine einfache Fertigung des Resonanzansaugsystems. Daneben kann das Stellelement auf der Keilober- und Keilunterseite in der Zuleitung geführt werden.

An Mehrzylinder-Brennkraftmaschinen ergibt sich eine besonders vorteilhafte Ausgestaltung der Erfindung gemäß Anspruch 3. Bei mittiger Unterteilung der Resonanzkammer in gleichgroße Teilkammern mit davon abgehenden Saugrohren zu den Zylindern gleichen Zündabstandes genügt bei ebenso mittiger Anordnung der sich aufweitenden Zuleitung zur Resonanzkammer ein einziges sich ebenfalls aufweitendes Stellelement.

Es existieren verschiedene Möglichkeiten zur Bewegung bzw. Positionierung des Stellelementes. Die Ansteuerung eines Hilfsmotors, welcher über sein Ritzel auf das beispielsweise mit einer Zahnstange versehene Stellelement wirkt, kann über die oft ohnehin bereits vorhandene elektronische Steuerung der Einspritzung bzw. Zündung der Brennkraftmaschine erfolgen. Daneben ist über eine Zylinder-Kolben-Einheit aber auch eine hydraulische Verstellung, beispielsweise in Abhängigkeit vom Schmieröldruck der Brennkraftmaschine möglich.

Auch ist gemäß Anspruch 4 die Möglichkeit für eine selbsttätige, durch die Druckverhältnisse im Ansaugsystem ausgelöste Positionierung des Stellelementes gegeben. Dazu muß das Stellelement in der Führungseinrichtung, beispielsweise zwei Gleitschienen, freigängig gelagert sein.

Insbesondere dann ist jedoch, wie Anspruch 5 beschreibt, die Anbringung eines die freie Bewegung des Stellelementes einschränkenden Dämpfungsorganes – beispielsweise eines Federelementes – vorteilhaft, um zu große Schwingungsamplituden der Bewegung zu vermeiden.

Im folgenden wird die Erfindung anhand eines in der Zeichnung skizzenhaft dargestellten Ausführungsbeispiels näher beschrieben.

Es zeigt:

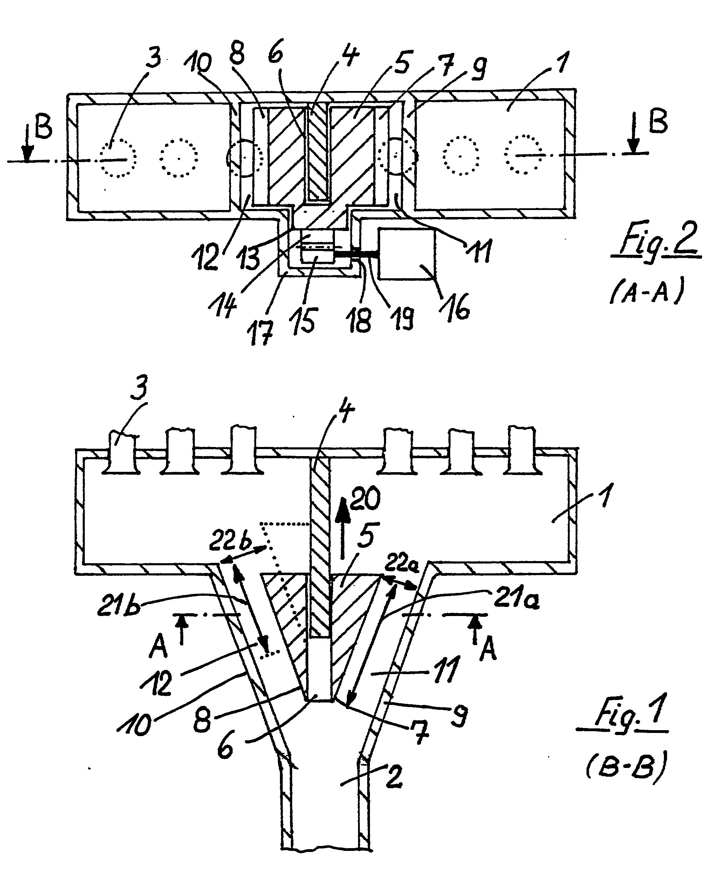

Fig. 1 die Daraufsicht auf ein längs der Linie B–B in Fig. 2 geschnittenes Ansaugsystem
Fig. 2 den Schnitt längs der Linie A–A in Fig. 1.

Der Ansaugtrakt einer nicht dargestellten Hubkolben-Brennkraftmaschine besteht im wesentlichen aus einer kastenförmigen Resonanzkammer 1 mit einer sich keilförmig aufweitenden Zuleitung 2 und den von der Resonanzkammer 1 zu den einzelnen Zylindern der Brennkraftmaschine führenden Saugrohren 3. Die Zuleitung 2 weist in ihrem Verlauf einen in der Breite kontinuierlich wachsenden Rechteckquerschnitt auf. Die Resonanzkammer 1 wird mittig unterteilt von einer Trennwand 4, welche bis in die Zuleitung 2 hineinreicht.

Innerhalb der Zuleitung 2 ist ein keilförmiges Stellelement 5 beweglich angeordnet. Die Führung des Stellelementes übernimmt dabei die Trennwand 4, welche in eine Längsnut 6 im Stellelement 5 eingreift. Die Seitenwände 7 bzw. 8 des Stellelementes 5 sind parallel zu den Seitenwänden 9 bzw. 10 der Zuleitung 2 ausgerichtet, so daß sich zu beiden Seiten des Stellelementes 5 je ein rechteckiger Kanal 11 bzw. 12 ergibt. An seiner Unterseite 13 trägt das Stellelement eine Zahnstange 14, welche mit dem Ritzel 15 eines Hilfsmotors 16 kämmt. Die Zahnstange 14 und das Ritzel 15 sind dabei innerhalb einer am Resonanzbehälter 1 vorgesehenen hohl ausgebildeten Führungsschiene 17 angeordnet. Erforderlich ist dabei eine Abdichtung des Resonanzbehälters 1 am Duchtritt 18 der Verbindungsstange 19 von Ritzel 15 und Hilfsmotor 16.

Duch entsprechende Ansteuerung des Hilfsmotors 16 wird eine Verschiebung des Stellelementes 5 in Richtung des Pfeiles 20 oder entgegengesetzt dazu ermöglicht. Befindet sich das Stellelement 5 in der dargestellten Position, so besitzen die Kanäle 11 und 12 das dargestellte Längenmaß 21a und Breitenmaß 22a. Eine Verschiebung des Stellelementes 5 in Richtung des Pfeiles 20 führt beispielsweise zu der – nur für die linke Hälfte des Stellelementes – gestrichelt dargestellten Position. Nunmehr hat der Kanal 12 (und ebenso auch der Kanal 11) das kürzere Längenmaß 21b und das größere Breitenmaß 22b.

Für die Resonanzfrequenz f in Rohren mit der Länge l und dem Durchmesser d gilt näherungsweise die folgende proportionale Abhängigkeit:

$$f \sim d \ /\sqrt{l^3}$$

Somit führt die obige Verschiebung des Stellelementes 5 in Pfeilrichtung 20 zu einer deutlichen Erhöhung der Resonanzfrequenz f, da der wirksame Durchmesser d (hier das Breitenmaß 22) vergrößert und zugleich die wirksame Rohrlänge l (hier das Längenmaß 21) verkleinert wird.

## Patentansprüche

1. Resonanzansaugsystem in einer Brennkraftmaschine mit mindestens einer durchströmten Resonanzkammer (1), mindestens einer Zuleitung (2) hierzu, deren Länge (21) kontinuierlich veränderbar ist, um die Eigenfrequenz des Resonanzsystems zur Ausnutzung von Schwingungen für eine Aufladung der Brennkraftmaschine beeinflussen zu können, und mit von der Resonanzkammer (1) zu den Zylindern der Brennkraftmaschine führenden Saugrohren (3), gekennzeichnet durch ein im Inneren der sich in Strömungsrichtung im Querschnitt kontinuierlich ändernden Zuleitung (2) vorgesehenes, im wesentlichen in Strömungsrichtung beweglich geführtes, sich in Strömungsrichtung im Querschnitt ebenfalls kontinuierlich veränderndes Stellelement (5).

2. Resonanzansaugsystem nach Anspruch 1, dadurch gekennzeichnet, daß die Zuleitung (2) und das Stellelement (5) keilförmig ausgebildet sind.

3. Resonanzansaugsystem für Mehrzylinder-Brennkraftmaschinen mit mittig unterteilter Resonanzkammer nach einem der vorangegangenen Ansprüche, dadurch gekennzeichnet, daß die Resonanzkammer (1) mit einer mittig angeordneten gemeinsamen Zuleitung (2) und einem gemeinsamen Stellelement (5) versehen ist.

4. Resonanzansaugsystem nach einem der vorangegangenen Ansprüche, dadurch gekennzeichnet, daß das Stellelement in Abhängigkeit von den im Ansaugsystem herrschenden Druckzuständen selbsttätig bewegbar ist.

5. Resonanzansaugsystem nach einem der vorangegangenen Ansprüche, dadurch gekennzeichnet, daß ein die Bewegung des Stellelementes dämpfendes Organ vorgesehen ist.

## Claims

1. A resonance suction system in an internal combustion engine having at least one resonance chamber (1) through which a stream flows, at least one feed pipe (2) thereto, the length (21) of which is able to be altered continuously in order to be able to affect the inherent frequency of the resonance system to utilize oscillations for a charging of the internal combustion engine, and having suction pipes (3) leading from the resonance chamber (1) to the cylinders of the internal combustion engine, characterised by an adjustment element (5) provided inside the feed pipe (2) which alters in cross-section continuously in the direction of flow, and which adjustment element is carried so as to be substantially movable in the direction of flow and likewise alters in cross-section continuously in the direction of flow.

2. A resonance suction system according to Claim 1, characterised in that the feed pipe (2) and the adjustment element (5) are constructed in a wedge shape.

3. A resonance suction system for multi-cylinder internal combustion engines with a centrally-subdivided resonance chamber according to one of the preceding claims, characterised in that the resonance chamber (1) is provided with a centrally-arranged common feed pipe (2) and a common adjustment element (5).

4. A resonance suction system according to one of the preceding claims, characterised in that the adjustment element is automatically movable in dependence upon the pressure conditions prevailing in the suction system.

5. A resonance suction system according to one of the preceding claims, characterised in that a member is provided which damps the movement of the adjustment element.

## Revendications

1. Système d'aspiration à résonance dans un moteur à combustion interne avec au moins une chambre de résonance (1) balayée, au moins une conduite (2) menant à celle-ci, dont la longueur (21) est modifiable en continu, afin de pouvoir intervenir sur la fréquence propre du système de résonance dans un but d'utilisation d'oscillations pour une suralimentation du moteur à combustion interne, et avec des tubulures d'aspiration (3) conduisant de la chambre de résonance (1) aux cylindres du moteur à combustion interne, caractérisé par un élément de réglage (5), prévu à l'intérieur du conduit (2) dont la section se modifie de manière continue en direction de l'écoulement, qui est essentiellement mobile dans son guidage suivant la direction d'écoulement et dont la section se modifie également de manière continue en direction de l'écoulement.

2. Système d'aspiration à résonance selon la revendication 1, caractérisé en ce que le conduit (2) et l'élément de réglage (5) sont réalisés en forme de coin.

3. Système d'aspiration à résonance pour moteurs à combustion interne à plusieurs cylindres avec une chambre de résonance partagée en son milieu selon l'une quelconque des revendications qui précèdent, caractérisé en ce que la chambre de résonance (1) est pourvue d'un conduit commun (2) disposé en son milieu et d'un élément de réglage commun (5).

4. Système d'aspiration à résonance selon l'une quelconque des revendications qui précède, caractérisé en ce que l'élément de réglage est déplaçable automatiquement en fonction des conditions de pression régnant dans le système d'aspiration.

5. Système d'aspiration à résonance selon l'une quelconque des revendications qui précèdent, caractérisé en ce qu'il est prévu un organe amortissant le déplacement de l'élément de réglage.

EP 0 255 059 B1

*Fig.2*
(A-A)

*Fig.1*
(B-B)